# NEW EUROPEAN PATENT SPECIFICATION

(11) **EP 0 437 780 B2**
(45) Date of publication and mention of the opposition decision: **19.08.1998**
(45) Mention of the grant of the patent: 11.10.1995
(21) Application number: 90124792.4
(22) Date of filing: 19.12.1990
(51) Int. Cl.: B62D 25/08

(54) **Front body structure of a vehicle**
Vorderwagenaufbau eines Fahrzeuges
Structure de la partie avant pour un véhicule

(30) Priority: 21.12.1989 JP 333140/89
(43) Date of publication of application: 24.07.1991
(73) Proprietor: Mazda Motor Corporation, Aki-gun Hiroshima-ken (JP)
(72) Inventor: Kanemitsu, Norihiko, Hiroshima-shi, Hiroshima-ken (JP); Hara, Kazuhiro, Aki-gun, Hiroshima-ken (JP); Umeda, Takashi, Hiroshima-shi, Hiroshima-ken (JP); Kogai, Masamichi, Hiroshima-shi, Hiroshima-ken (JP); Yamada, Kiyoshige, Aki-gun, Hiroshima-ken (JP)
(74) Representative: Gauger, Hans-Peter, Dipl.-Ing.

(56) References cited:
- DE-A- 2 625 724
- DE-U- 8 533 148
- US-A- 2 715 448
- US-A- 3 044 822
- US-A- 4 542 934
- US-A- 4 822 096
- PATENT ABSTRACTS OF JAPAN vol. 12, no. 343 (M-741) 14 September 1988& JP-A-63 103 771 (NISSAN) 9 May 1988

## Description

### BACKGROUND OF THE INVENTION

This invention relates to a front body structure of a vehicle, wherein a nose unit having at least a shroud panel and a shroud upper is mounted to a front part of a vehicle body.

In the conventional art of a vehicle assembling line (main line), since each component to be fitted to a front part of a vehicle body, such as a bumper, a radiator grille, head lamps and a radiator, is fitted at different stations, the number of stations is increased and accordingly, the line becomes longer and more complicated. It also has an operational problem since the operator on a mixed flow line, in which various types of vehicles are assembled, needs to make a decision whether the components should be fitted to the body depending on a vehicle type.

By incorporating several components into one unit, easing the operation on the assembling line and reducing the number of stations can be planned. By this, better precision for fitting components to the unit can also be improved since the whole unit is assembled in a separate line.

Considering the above aspects, JP-A-63103771 proposes to incorporate components, such as a radiator, head lamps, a bumper and a radiator grille, to one unit by fitting them to a radiator core support and mount this unit to a front part of a vehicle body.

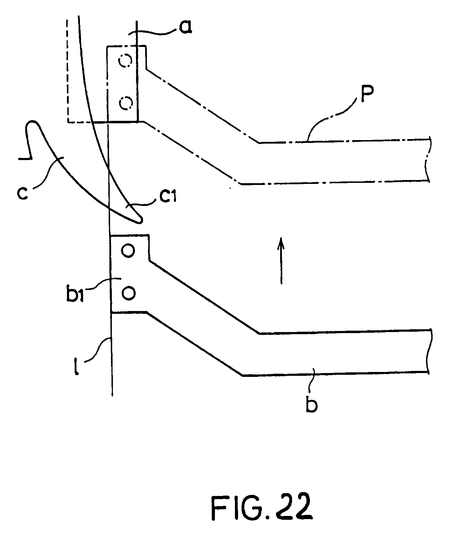

However, under such a structure that the unit is inserted from the front, it may not be applied for such contemporary vehicles where front fenders curve to the inboard and consequently have a narrower front end. In other words, as shown in Fig.22, both ends b₁ of the shroud upper b which forms mounting portion for the unit to the vehicle body (wheel apron reinforcement a) at inserting a unit may interfere with the front end portion c₁ of the front fender positioned in the inner side of the vehicle body. The vertical line ℓ designates an inserting line of the unit and the dotted line P designates a mounting position of the unit.

### SUMMARY OF THE INVENTION

The object of the present invention is to provide a front body structure of a vehicle where a nose unit is mounted to a front part thereof without interfering with the front fenders that are already mounted to the vehicle body,

In order to achieve this object, the front vehicle body of the present invention comprises the structure according to the features of claim 1. In the dependent claims 2 and 3 further embodiments of the invention are defined.

### BRIEF DESCRIPTION OF THE DRAWINGS

The accompanying drawings show prefered embodiments of the present invention.
Fig.1 is a perspective diagram of a front part of a vehicle.
Fig.2 is a perspective diagram of a front part of a vehicle body.
Fig.3 is a detailed view around a bracket.
Fig.4 is a perspective view of a nose unit.
Fig.5 is a exploded perspective view of a nose unit.
Fig.6 is a schematic perspective view of a unit base of a nose unit.
Fig.7 is a schematic perspective view of a modified unit base of a nose unit.
Fig.8 is a sectional view illustration a mounting at the last step.
   Figs.9-11 show the second embodiment, in which

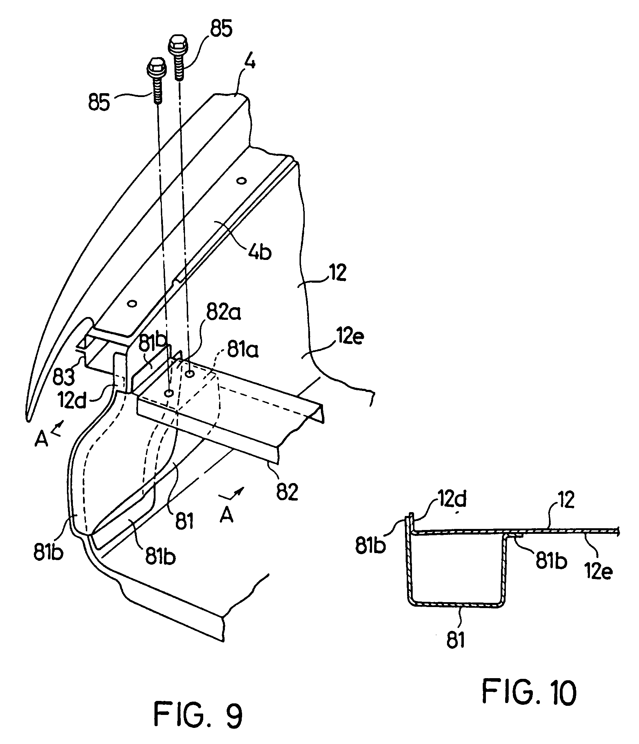

Fig.9 is a detailed view around a bracket;
Fig.10 is a sectional view taken on a line A-A of Fig.9;

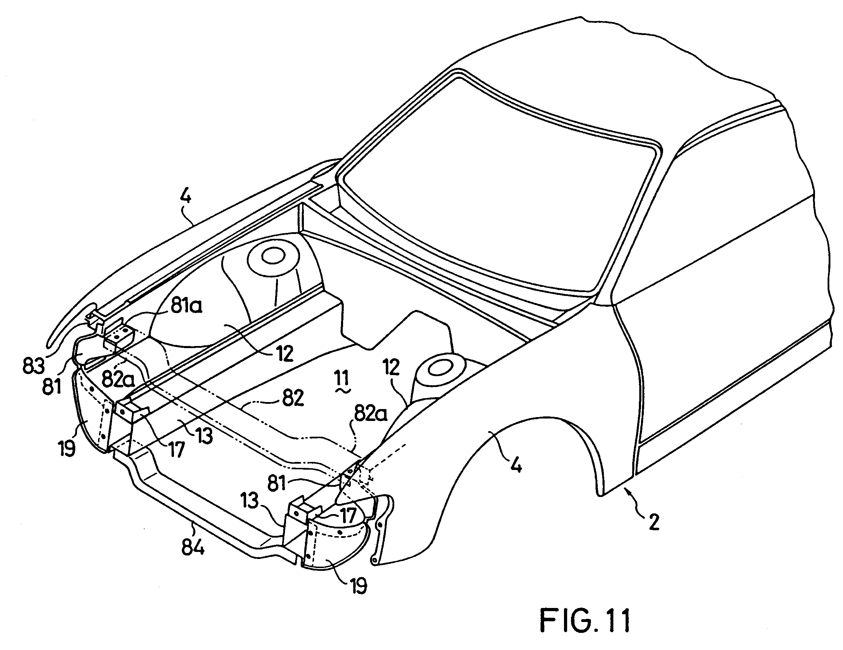

Fig.11 is a perspective view of a front part of a vehicle body.

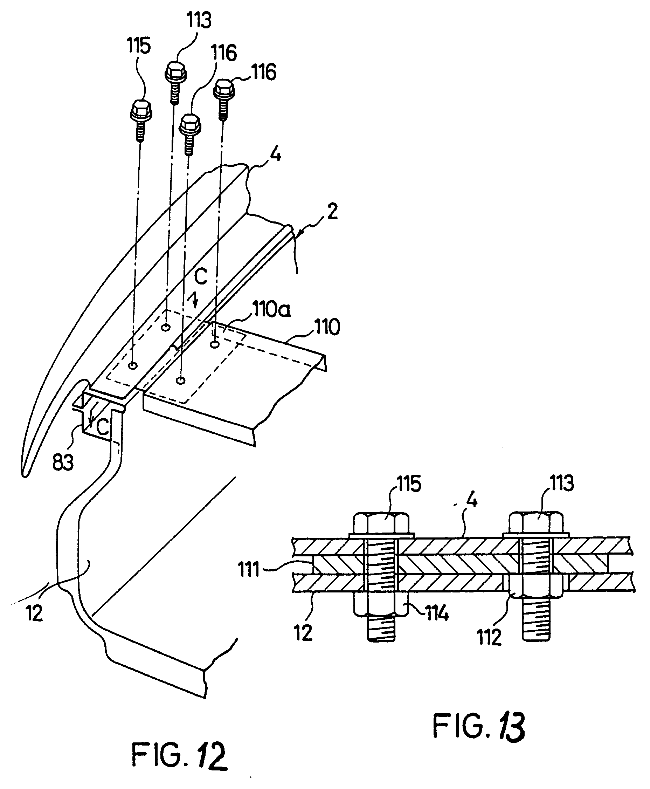

   Figs.12-14 show a third embodiment, in which
Fig.12 is a detailed view around a bracket;

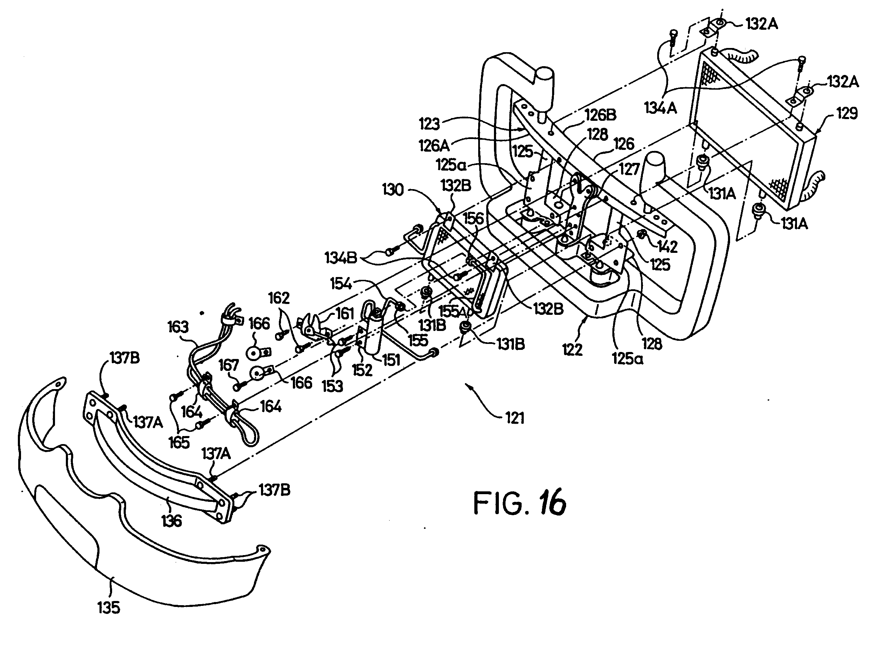

Fig.13 is a sectional view on line C-C of Fig.16;

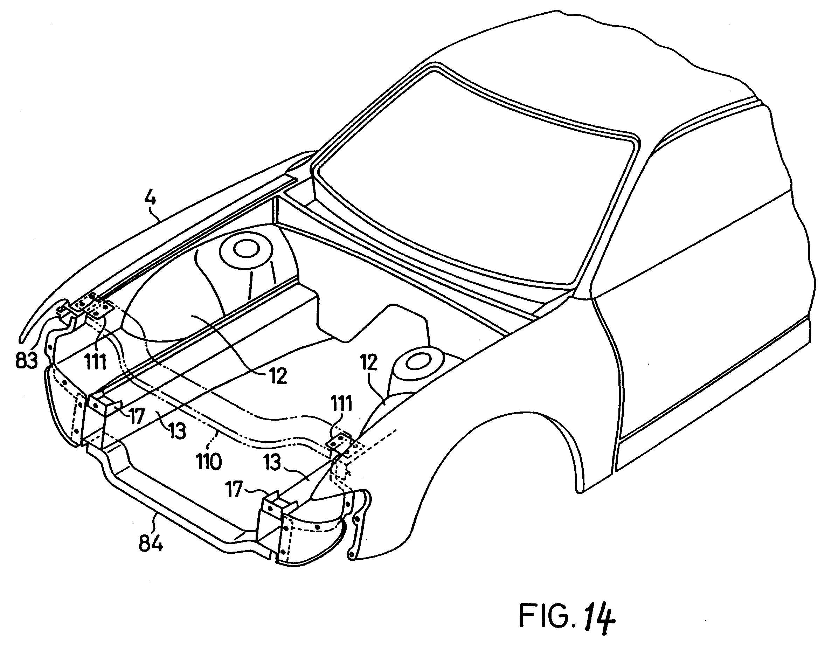

Fig.14 is a perspective view of a front body of a vehicle body.

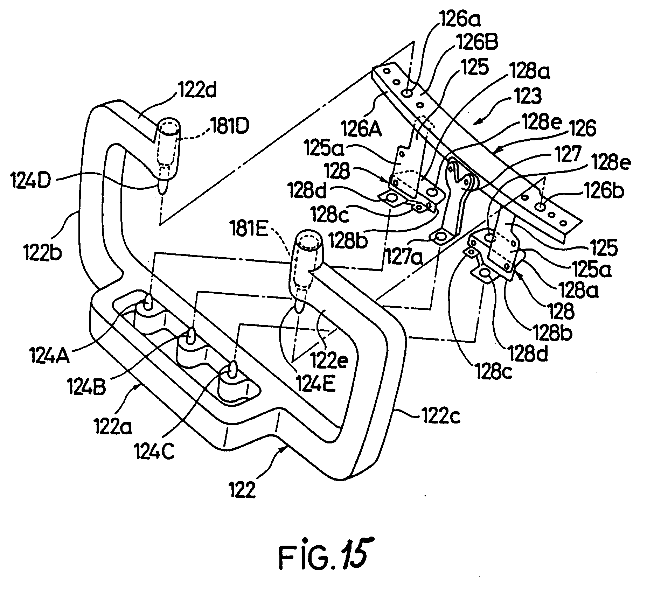

   Figs.15-21 show a forth embodiment of the present invention, in which
Fig.15 is a diagram illustrating a relationship between a unit base and a jig for mounting a unit base;
Fig.16 is a exploded perspective view of a nose unit;

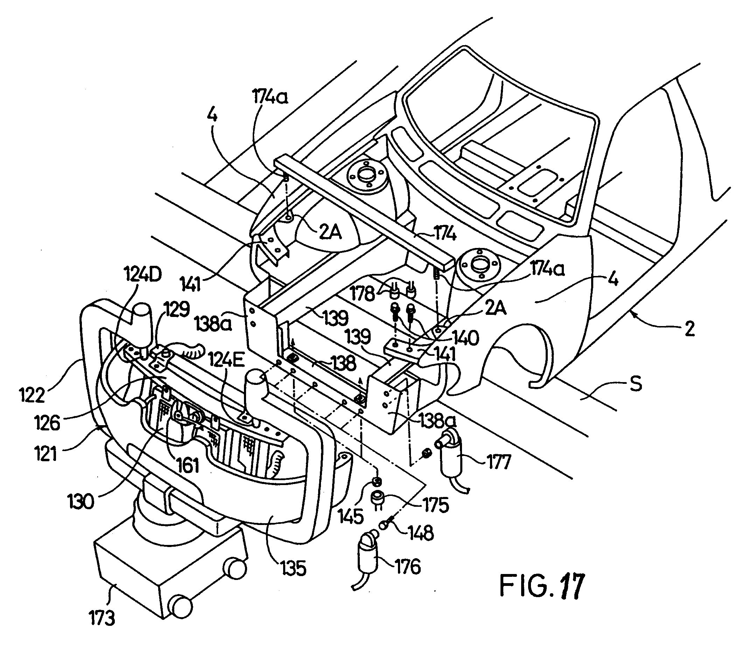

Fig.17 is a descriptive diagram of a mounting for a nose unit to a front part of a vehicle body;

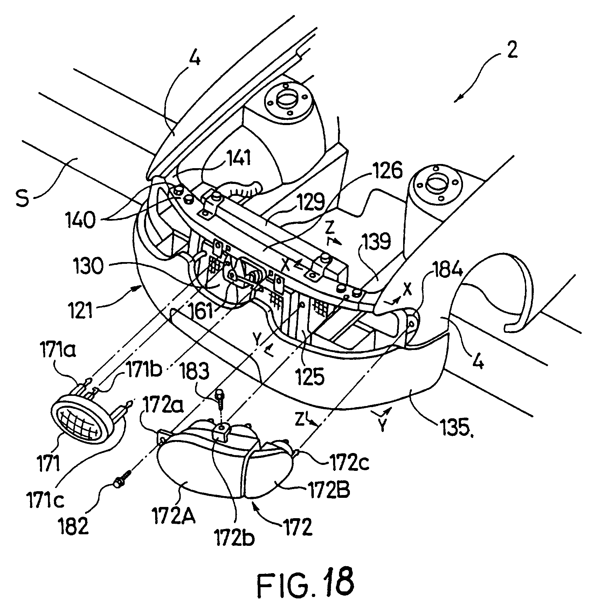

Fig.18 is a diagram illustrating a front part of a vehicle body after a nose unit is mounted;

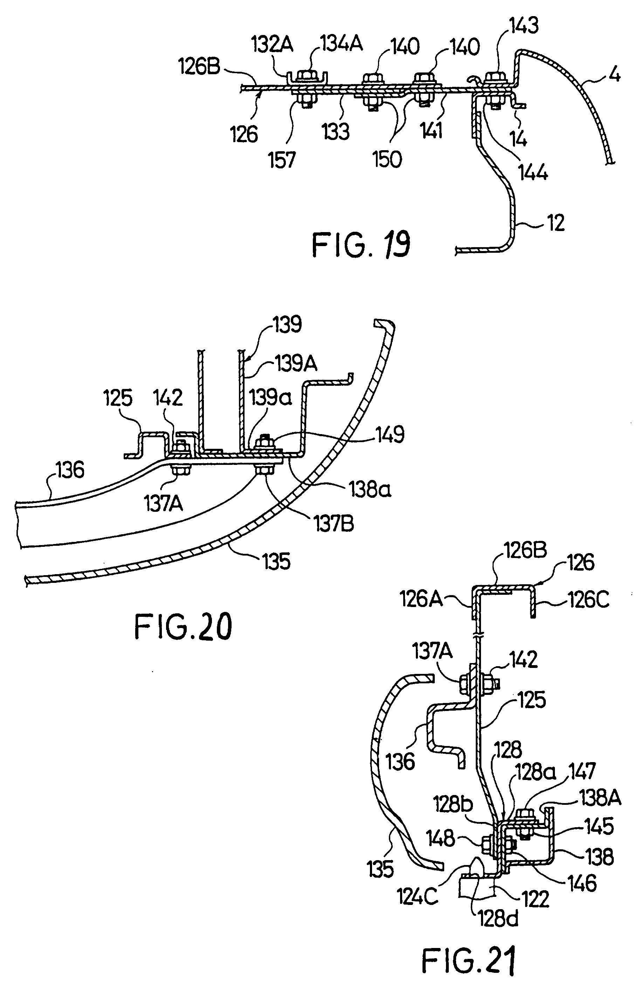

Figs.19-21 are sectional views taken on lines X-X, Y-Y, Z-Z of Fig.17 respectively.
Fig.22 is a descriptive diagram for a conventional art.

The preferred embodiment will be described below with reference to the accompanying drawings.

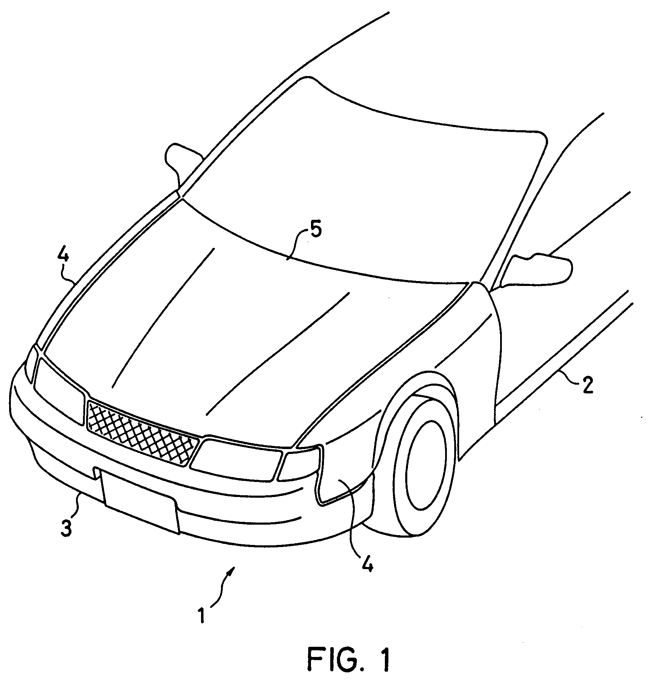

In Fig.1 illustrating a front part of a vehicle, reference numeral 1 designates a vehicle having a nose unit 3 which is mounted on the front part of a vehicle body 2. Front fenders 4 are provided on both sides of the body 2, and a bonnet 5 is provided on the front top of the vehicle body 2.

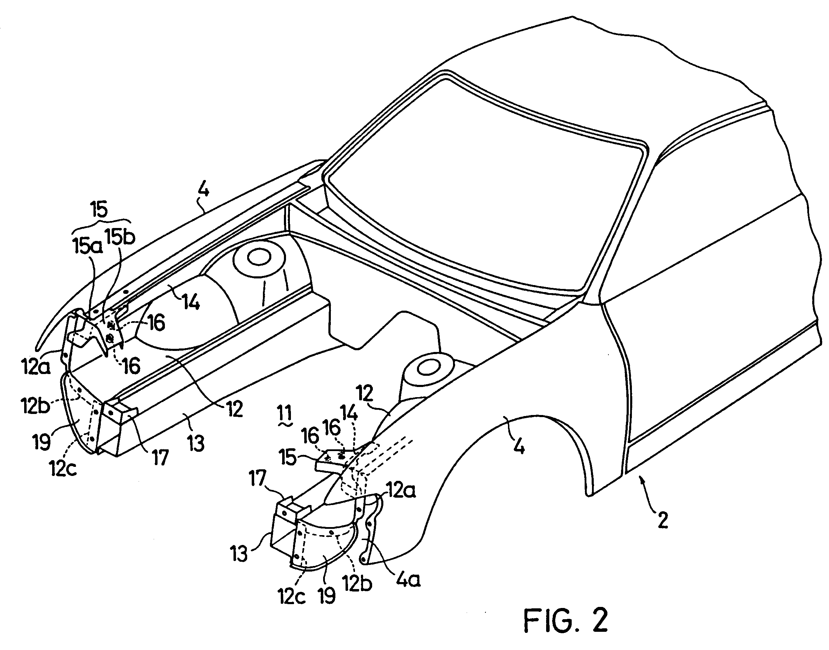

In the vehicle body 2, as shown in detail in Fig. 2, front sideframes 13 are connected to the vehicle body under wheel aprons 12 forming right and left side walls of an engine room 11 and a wheel apron reinforcement 14 are connected to the vehicle body above the wheel aprons 12 so that both top and bottom closed sectional constructions extending longitudinally of the vehicle body are formed.

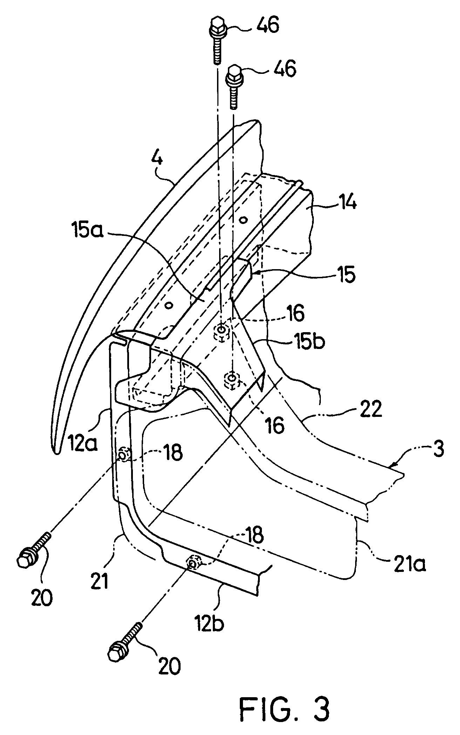

A bracket 15 projecting to the inner side of the vehicle body is provided around each wheel apron reinforcement 14. Each bracket 15, as shown in Fig. 3, comprises a base part 15a fitted to the adjacent wheel reinforcement 14 and a mounting portion 15b extending inboard from the base part 15a. A fitting portion 22b of a shroud upper 22 of nose unit 3 is mounted to the mounting portion 15b. Two nuts 16 are welded on the underside of the mounting part 15b. Other brackets 17 are provided on the front top ends of the front sideframes 13.

Mounting flange portions 12a, 12b, 12c are formed on the front end portion of each wheel apron 12. Nuts 18 for fixing a shroud panel 21 by bolts 20 are welded on the undersurface of the flange portions 12a, 12b. A nut 37 for fixing the shroud panel 21 and a junction panel 31 by a bolt 34 are welded on the undersurface of each flange portion 12c.

Also, front end panels 19 are provided on the front end portion of the wheel aprons 12.

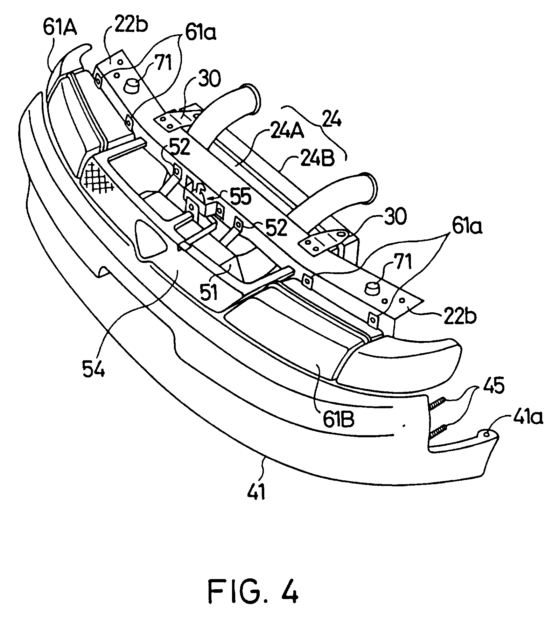

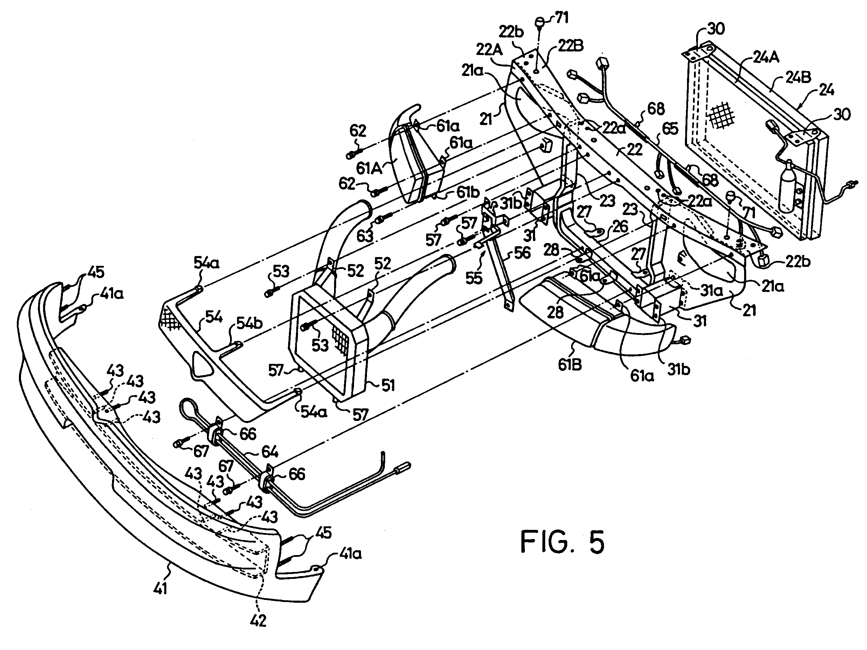

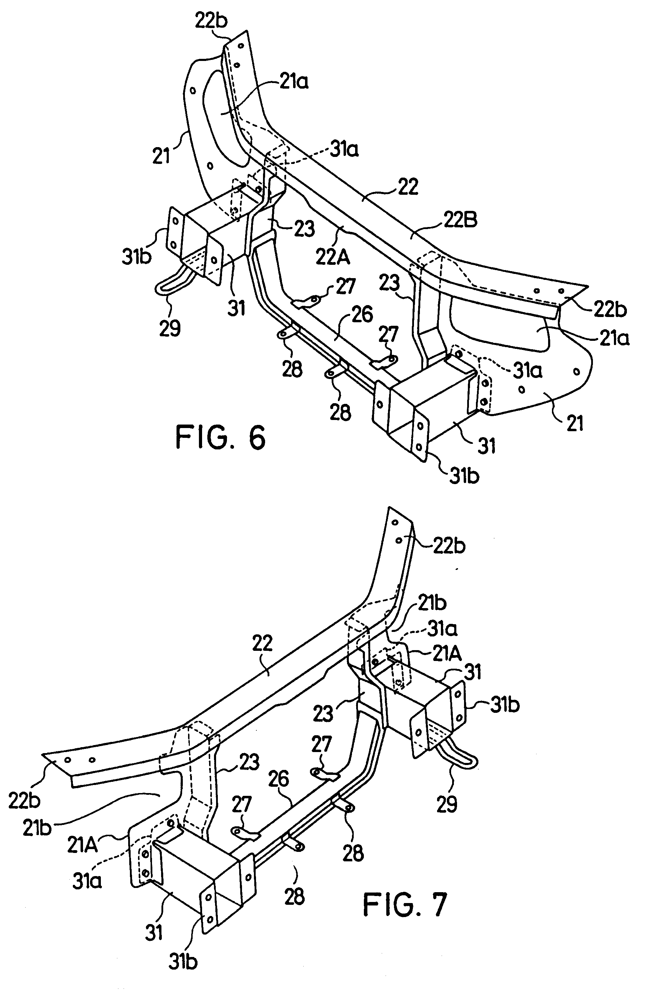

The nose unit 3 is constructed as illustrated in detail in Figs.4 and 5. The unit base of the nose unit 3 is connected to the shroud upper 22 extending in the widthwise direction of the vehicle body on the upper end portions of the shroud panels 21 as shown in Fig.6. This shroud upper 22 comprises a vertical wall part 22A extending vertically and an upper wall part 22B extending rearwardly from the upper end of the vertical wall part 22A. A pair of vertical members 23 are hanging down from a center part in the widthwise direction of the upper wall part 22B.

A cross member 26 of a closed sectional construction, which is formed by contacting an upper member 26A with a lower member 26B, is provided on the both lower ends of the vertical members 23. An opening 21a for later described lump units 61A, 61B is provided on the shroud panel 21, however, the opening can be a cutaway part 21b instead of an opening as shown in Fig.7.

On the cross member 26, supporting brackets 27 for supporting a condenser 24A and a radiator 24B both of which are weight members are provided on the rear side, and supporting brackets 28 for supporting an intercooler 51 are provided on the front side. The condenser 24A and the radiator 24B are connected integrally by a member (not shown in the drawings) the lower end portions thereof being supported by supporting brackets 27 through rubber mount members, and the upper end portions thereof being fixed to fitting holes 21a of an upper wall part 22B of the shroud upper 22 by tightening bolts 33 through brackets 30. In Figs .6 and 7, reference numeral 29 designates a pulling hook fixed to the underside of the junction panel 31.

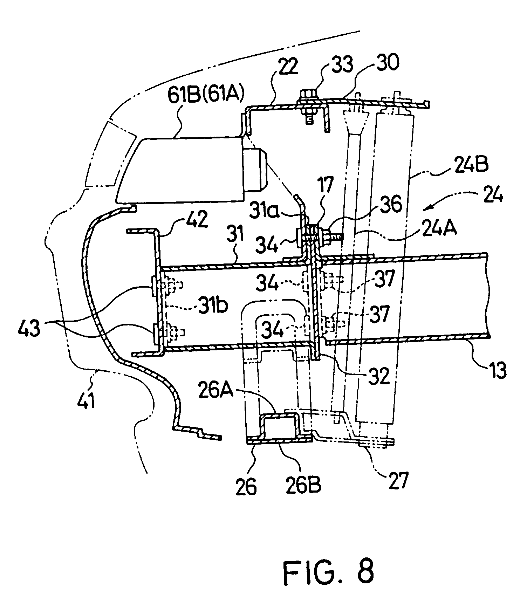

A rear end portion of each junction panel 31 of square cylindrical configuration is mounted to the shroud panel 21. As shown in Fig. 8, a rear end flange portion 31a of the junction panel 31 is positioned to the rear side of the shroud panel 21. The junction panel 31 and a front sideframe are clamped coaxially by the front sideframe 13 (a nut 36 welded on the rear surface of the bracket 17) and a wheel apron 12 (nuts 37 welded or the rear surface of a the flange portion 12c) through a junction plate 32 of flat plate configuration.

Bolts 43 provided on a bumper reinforcement 42 where a bumper 41 is mounted to are fixed to a front end flange portion 31b of each junction panel 31.

The both ends of the bumper 41 are also fixed to a mounting portion 4a of each front fender 4 of the vehicle body 2 by bolts 45 provided on the bumper 41 and bolts (not shown in the drawings) passing through a fitting hole 41a of the bumper 41.

Both ends 22b of the upper wall parts 22B of the shroud upper 22 are overlapped on brackets 15 and are clamped to brackets 15 by bolts (only two bolts 36 of one mounting portion 22b are shown in Fig.5).

An upper part of intercooler 51 is clamped to the vertical wall part 22A of the shroud upper 22 by bolts 53 through brackets 52.

A radiator grille 54 is positioned at the front center part of the vehicle, both right and left mounting portions 54a thereof being fitted into fitting holes of the vertical wall parts 22A of the shroud upper 22. A center mounting portion 54b is fitted into a fitting hole of a vertical member 56 of bonnet lock means 55.

Reference numerals 61A, 61B are right and left lamp units, mounting portions 61a on the upper end of each unit are clamped to the vertical wall part 22A of the shroud upper 22 by bolts 62, and mounting portions 61b on the lower end of each unit are clamped to the shroud panel 21 by bolts 63 (only bolts 62, 63 and 61b for the lamp unit 61A are illustrated in the drawing).

Reference numerals 64, 65 are harness for connecting the electric system and are clamped to the support member 26 by fastening bolts 67 into a mounting portion 66 and fitted into a fitting hole of the upper wall part 22B of the shroud upper 22 through mounting portions 68 respectively. Reference numerals 71 designate shock absorber members for the shock at opening/closing the bonnet 5 and connected to an upper wall part 22B of the shroud upper 22.

Since the mounting portions 15b(mounting portions for the shroud upper) of the brackets 15 for the wheel reinforcement 14 are projecting to the inner side of the vehicle body with respect to the fixing portion for the front fenders 4 when the nose unit 3 is inserted to the vehicle body 2 from the front, the nose unit 3 won't interfere with the front fenders 4 of the vehicle body 2 and it is positioned by overlapping a fixing portion 22b on both ends of the shroud upper 22 of the nose unit 3 with the mounting portions 15b of brackets 15 of the wheel reinforcements 14.

When the bolts 46 are tightened into the nuts 16 of the mounting portions 15b of brackets 15 from the top, the nose unit 3 (a shroud upper 22) is fixed to the vehicle body 2.

In the above embodiment, each bracket 15 is separate from its adjacent wheel reinforcement 14, however, it can be integrally formed with the wheel reinforcement 14 or with a wheel apron 12.

In the above embodiment, bracket 15 is fixed to the wheel apron reinforcement 14, however, as shown in Figs.9-11, a bracket 81 having a hollow could be used which is fixed on the engine room side of the wheel apron 12 and on further inner and lower than a mounting portion 4b of the vehicle body 2 of the front fender 4 so that a fixing portion 82a of a shroud upper 82 is clamped to an upper surface 81a of the bracket 81 by bolts 85. The bracket 81 comprises a flange portion 81b on its periphery, the flange portion may be fixed to the front end flange portion 12d and an inner surface 12e of the wheel apron 12 by being welded or may be connected to a wheel apron reinforcement 83. Reference numeral 84 designates a cross member for connecting right and left front side frames 3.

As shown in Figs. 12, 13 and 14, when a fixing portion 110a for a shroud upper 110 is disposed to a mounting portion for the vehicle body 2 of the front fender 4 on the inner side, a bracket 111 for supporting the shroud upper 110 can be not fixed to both the vehicle body 2 and the shroud upper 110.

In other words, before the nose unit 3 is mounted to the vehicle body 2, a first fixing portion is constructed by clamping a bracket 111 to the front fender 4, which is done by fastening a bolt 113 wherein a base part of the bracket 111 is overlapped on the under side of the front fender 4. Then the front fender 4, where the base part of the bracket 111 is fixed to, and a bracket 111 are overlapped on the top of the wheel apron 12 so that a second fixing portion is formed by clamping them by a bolt 115 and a nut 114. Through this, the bracket 111 is fixed to the wheel apron 12 (the vehicle body 2) together when the front fender 4 is fixed to the wheel apron 12.

Under this condition, the nose unit 3 is inserted and determines the position of it and a fixing portion 22b for the shroud upper 22 is clamped to the bracket 111 by a bolt 116. When the front fender 4 is replaced, it can be removed by untightening bolts 113, 115.

Furthermore, on the above embodiment, the support member for supporting the heavyweight member such as a radiator comprises one member extending in the widthwise direction of the vehicle body, however, it may comprise two support members 128 being spaced with a fixed distance in the widthwise direction.

As shown in Figs.15 and 16, the components are fitted to a nose unit 121 wherein a nose base 121 is put on a jig 122 for mounting the nose unit.

The jig 122 for mounting the nose unit comprises a base part 122a extending in the widthwise direction of the vehicle body, vertical arm parts 122b, 122c extending upwardly from both ends of the base part 122a, and arm parts 122d, 122e extending inwardly from the upper ends of the arm parts 122d, 122e. On the base part 122a, three engaging pins 124A, 124B, 124C are provided upwardly projecting, but moving in the vertical direction, and on the arm parts 122d, 122e, No engaging pins 124D, 124E are provided downwardly projecting, but moving in the vertical direction. The engaging pins 124A-124E move vertically by cylinders (only cylinders 181D, 181E for the engaging pins 124D, 124E are shown in the drawing).

A unit base 123 comprises right and left shroud panels 125, a shroud upper 126 extending in the widthwise direction of the vehicle body and fixed to the upper end of the shroud panels 125, a center steer 127 hanging down from the mid-position of the shroud upper 126 in the widthwise direction of the vehicle body, and first and second support members 128 each fixed to the lower end portion of each shroud panel 125.

In detail, the shroud upper 126 comprises a vertical wall part 126A extending vertically, an upper wall part 126B extending rearwardly from the upper end of the vertical wall part 126A, and a rear wall part 126C extending downwardly from the rear end of the upper wall part 126B (Fig.21). The center steer 127 extending in the vertical direction of the vehicle body is hanging down from the midposition of the vertical wall part 126A in the widthwise direction of the vehicle body.

Each support member 128 comprises an upper wall part 128a for supporting a lower part of a radiator 129 which is a heavyweight member, a vertical wall part 128b extending downwardly from the front end of the upper wall part 128a and contacts the shroud side panel 125, and a support part 128c for supporting a cooler condenser 130 which is a heavyweight member and projects to the front from the lower end of the vertical wall part 128b.

On both ends of the shroud upper 126 (the vertical wall part 126B) of the unit base 123, on the lower end of the center steer 127, and on the front part of the support members 128, an engaging part comprising fitting holes 126a, 126b, 127a, 128d, 128d for detacheably connecting with the engaging pins 124D, 124E, 124B, 124A, 124C are formed. The position of the nose unit 121 is determined by the relationship between the engaging pins 124D, 124E, 124B, 124A, 124C and the fitting holes 126a, 126b, 127a, 128d, 128d.

A lower end portion of a radiator 129 and the cooler condensor 130 is supported by upper wall parts 128a of the support members 128 (fitting holes 128e) and support parts 128c (fitting holes) through rubber mounts 131A, 131B. The upper end portion of the radiator 129 and the cooler condenser 130 are clamped to the upper wall part 126B (fitting holes) of the shroud upper 126 reinforced by a radiator reinforcement 133 (refer to Fig. 23) and a vertical wall part 126A by bolts 134A, 134B through brackets 132A, 132B respectively. In Fig.23, reference numeral 157 designates a nut for screwed on the bolt 134A which is already welded on the underside of an upper wall part 126B of the shroud upper 126 through the radiator reinforcement 133.

Mounting portions 125a are formed around the lower end portion of the shroud panel 125 so that two inner bolts 137A out of four-in-a-set bolts disposed on the bumper reinforcement 136, which a bumper face 135 is mounted to, are fixed to the mounting portions 125a as a temporarily mounting for forming a unit by using a nut 142. The other outer two bolts 137B are fixed to a front flange part 139a of a frame outer 139A of a front frame 139 through side part 138a of a cross member 138 when mounting a nose unit 121 to a front part of a vehicle so that the bumper reinforcement 136 is connected to the vehicle body 2 directly (Fig.20).

Both ends of the upper wall part 126B of the shroud upper 126 are clamped to a shroud bracket 141 by bolts 140. As shown in Fig.18, a base part of this shroud bracket 141 is clamped between the wheel apron reinforcement 14 and the front fender 4 by a bolt 143 and a nut 144.

Accordingly, the support member 128 is mounted by the cross member 138 wherein the nose unit 121 is installed in the front part of the vehicle body 2 and fixed to a front wall part and an upper wall part of an upper member 138A of the cross member 138 by bolts 147, 148 and nuts 145, 146 through seven fitting holes of an upper wall part 128a and a front wall part 128b of the support member 128 (Fig.21).

Reference numeral 151 designates a cooler receiver, the side part thereof is clamped to the center steer 127 by bolts 153 through bracket 152. A joint metal fitting 155 of a horse member 154 from a cooler receiver 151 is connected to a joint metal fitting of a horse member 155A of the cooler condenser 130.

Reference numeral 161 designates bonnet lock means clamped to a vertical wall part 126A of the shroud upper 126 by bolts 162 through the center steer 127.

Reference numeral 163 designates a power steering pipe clamped to a center steer 127 and one of the shroud panels 125 through a mounting implement 164 and bolts 165. Reference numerals 166 designate horn members fixed to the center steer 127 by a bolt 167.

Right and left lamp units 172 comprising a radiator grille 171, a head lamp 172A, and a front combination lamp 172B, those positioned front center part of the vehicle, are mounted to the nose unit and the vehicle body after the nose unit 121 is mounted to the vehicle body as shown in Fig.18, this step differs from the first embodiment. In detail, the radiator grille 171 comprises engaging parts 171a, 171b, 171c, having right and left side engaging parts 171a, 171c connected detacheably to a vertical wall part 126A (a fitting hole) of the shroud upper 126 and a center engaging part 171b connected detacheably to a vertical wall part 126A (a fitting hole) of the shroud upper 126 through bonnet lock means 161. In the lamp unit 172, mounting portions 172a, 172b on the head lamp 172A side are clamped to a side end portion of the shroud panel 125 and un upper wall part 126B (a fitting hole) of the shroud upper 126 by bolts 182, 183 respectively, and an engaging portion 172c on the front combination lamp 172B side is fitted into an engaging portion 184 of the wheel apron.

According to the above structure, the components are mounted to the unit base wherein the unit base 123 is supported by the jig 122 for mounting the nose unit and also positioned the relationship between the engaging pins 124A-124E and the fitting holes 126a, 126b 127a, 128d, 128d (Fig.16).

After fitting components to the nose unit, as shown in Fig.17, the nose unit 121 is put on a truck 173 with the jig 122 and mounted to the front part of the vehicle body 2 moving on an assembling line S (a main line). At this moment in this embodiment, in order to lessen the deformation of the vehicle body 2 (so to speak a front opening), although engaging projecting parts 174a of a deformation preventing tool 174 for preventing the deformation is detacheably engaged with engaging portions 2A of both right and left sides of the vehicle body 2, engaging portions 2A and the deformation preventing tool 174 can be excluded since the cross member 138 has an effect for preventing a deformation of the front part of a vehicle.

Thus, the center steer 127 and the support member 128 are clamped to the cross member 138 by tightening the bolt 147 into a nut 146 through fastener 175, 176 using a bolt 148 and a nut 145. Also, the bumper reinforcement 136 is clamped to a side part 138a of the cross member 138 by screwing a nut 149 on a bolt 137B by a fastener 177.

Moreover, the shroud upper 126 is clamped to the shroud bracket 141 by screwing nuts 150 on bolts 140 by a fastener 178.

The radiator grille 171 and the lamp unit 172 are installed after thus the nose unit 121 is mounted to the front part of the vehicle body 2.

## Claims

1. A front body structure of a vehicle including a nose unit (3; 121) having at least a shroud panel (21; 125), a shroud upper (22; 82; 110; 126) and mounted as a composite unit to a front part of a vehicle body (2), comprising
- a nose unit mounting portion (15b; 81a) for mounting said nose unit (3; 121) from the front of said vehicle body and disposed further inboard with respect to the vehicle body (2) than an adjacent fender mounting portion (14; 4b) for a front fender (4) which has been mounted to said vehicle body prior to the mounting of said nose unit and which has a forward end portion that is curved inwardly further than said adjacent fender mounting portion;
- a fixing portion (22b; 82a; 110a) formed with an adjacent end of said shroud upper (22; 82; 110; 126) and being a part of said nose unit (3; 121) as fixed to said nose unit mounting portion (15b; 81a);
- said nose unit mounting portion (15b; 81a) for said nose unit (3; 121) being disposed below said adjacent fender mounting portion (4b; 46) and comprising brackets (15; 81; 111; 141) having each a base part (15a; 81b) fixed to an adjacent front end portion of a wheel apron reinforcement (14) which forms said adjacent fender mounting portion for a front fender (4), said fixing portion (22b; 82a; 110a) of said shroud upper (22; 82; 110) for said nose unit (3) being mounted thereon and extending inboard from said base part (15a; 81b);
- said nose unit (121) including right and left end fitting holes (126a, 126b) for a mounting jig (122) that are provided at the respective right and left end portions of the nose unit at an inboard position with respect to further fitting holes for said brackets (141).

2. A front body structure as claimed in claim 1, wherein said brackets (81) comprise an upper surface part (81a) for fixing an adjacent fixing portion (82a) of said shroud upper (82).

3. A front body structure as claimed in claims 2, wherein each bracket (81) is welded to a front end flange portion (12d) and an inner surface (12e) of the adjacent wheel apron (12).

## Patentansprüche

1. Vordere Karosseriestruktur eines Fahrzeuges, die eine vordere Einheit (3; 121) mit wenigstens einem Querträger (21; 125) und einem Trägeroberteil (22; 82; 110; 126) aufweist und an einem Vorderteil eines Fahrzeugaufbaus (2) als eine Verbundeinheit montiert ist, bestehend aus
- einem Montageteil (15b; 81a) der vorderen Einheit zur Montage der vorderen Einheit (3; 121) von der Stirnseite des Fahrzeugaufbaus und mit einer Anordnung in Bezug auf den Fahrzeugaufbau (2) weiter nach innen als ein benachbarter Kotflügel-Montageteil (14; 4b) für einen vorderen Kotflügel (4), der an dem Fahrzeugaufbau montiert worden ist vor der Montage der vorderen Einheit und der einen vorderen Endbereich hat, welcher weiter nach innen gekrümmt ist als der benachbarte Kotflügel-Montageteil;
- einem Befestigungsteil (22b; 82a; 110a), der mit einem benachbarten Ende des Trägeroberteils (22; 82; 110; 126) ausgebildet ist und einen Teil der vorderen Einheit (3; 121) bildet mit einer Befestigung an dem Montageteil (15b; 81a) der vorderen Einheit;
- wobei der Montageteil (15b; 81a) der vorderen Einheit für die vordere Einheit (3; 121) unterhalb des benachbarten Kotflügel-Montageteils (4b; 46) und Stützen (15; 81; 111; 141) aufweist, die jeweils einen Basisteil (15a; 81b) haben, der an einem benachbarten vorderen Endteil einer Radschürze-Verstärkung (14) befestigt ist, der den benachbarten Kotflügel-Montageteil für einen vorderen Kotflügel (4) bildet, der Befestigungsteil (22b; 82a; 110a) des Trägeroberteils (22; 82; 110) für die vordere Einheit (3) darauf montiert ist und nach innen von dem Basisteil (15a; 81b) verläuft;
- wobei die vordere Einheit (121) Passlöcher (126a, 126b) am rechten und linken Ende für eine Montageschablone (122) aufweist, die an den betreffenden rechten und linken Endteilen der vorderen Einheit (121) an einer inneren Position in Bezug auf weitere Passlöcher für die Stützen (141) vorgesehen sind.

2. Vordere Karosseriestruktur nach Anspruch 1, bei welcher die Stützen (81) einen oberen Flächenteil (81a) für die Befestigung eines benachbarten Befestigungsteils (82a) des Trägeroberteils (82) aufweisen.

3. Vordere Karosseriestruktur nach Anspruch 2, bei welcher jede Stütze (81) an einem vorderen Endflanschteil (12d) und an einer Innenfläche (12e) der benachbarten Radschürze (12) verschweißt ist.

## Revendications

1. Construction de carrosserie avant d'un véhicule, comprenant une unité avant (3; 121) à au moins un panneau d'enveloppe (21; 125) et une enveloppe supérieure (22; 82; 110M 126) et montée à une partie avant d'une carrosserie de véhicule (2) en tant qu'une unité composée, qui comprend
- une partie à monter l'unité avant (15b; 81a) pour le montage de ladite unité avant (3; 121) de l'avant de ladite carrosserie de véhicule et disposée plus loin vers l'intérieur, par rapport à la carrosserie de véhicule (2) qu'une partie de fixation d'aile (14; 4b) voisine à monter une aile avant à joue (4), qui était montée sur ladite carrosserie de véhicule avant l'assemblage de l'unité avant et qui présente une partie d'extrémité avant qui est incurvée plus loin que ladite partie de fixation d'aile voisine;
- une partie de fixage (22b; 82a; 110a) à une extrémité voisine y formée de ladite enveloppe supérieure (22; 82; 110: 126), qui constitue un élément de l'unité avant (3; 121) à fixage à ladite partie à monter l'unité avant (15b; 81a);
- ladite partie à monter l'unité avant (15b; 81a) pour l'unité avant (3; 21) étant disposé au dessous de ladite partie de fixation d'aile (4b: 46) voisine et comprenant des équerres d'appui (15; 81; 111; 141) dont chacune est prévue d'une partie de base (15a; 81b) fixée à une partie voisine d'extrémité avant d'une plaque de renfort des couvre-roues (14), qui constitue ladite partie de fixation d'aile (14; 4b) voisine à monter une aile avant à joue (4), ladite partie de fixage (22b; 82a; 110a) de ladite enveloppe supérieure (22; 82; 110) pour l'unité avant (3) étant y montée et s'étendant de ladite partie de base (15a; 81b) vers l'intérieur,
- ladite unité avant (121) comprenant des trous de montage d'extrémité droite et gauche (126a, 126b) à monter une monture d'assemblage (122), qui sont prévus aux parties d'extrémité droite et gauche respectives de l'unité avant (121) à une position plus loin vers l'intérieur par rapport à des autres trous de montage pour lesdites équerres d'appui (141).

2. Construction de carrosserie avant selon la revendication 1, dans laquelle lesdites équerres d'appui (81) comprennent une partie de surface supérieure (8a) à fixer une partie de fixage voisine (822a) de ladite enveloppe supérieure (82).

3. Construction de carrosserie avant selon la revendication 2, dans laquelle chaque équerre d'appui (8a) est soudée à une partie de bride d'extrémité avant (12d) et à une surface intérieure (12e) du couvre-roue voisin (12).
